# EUROPÄISCHE PATENTSCHRIFT

(11) **EP 3 465 699 B1**
(45) Veröffentlichungstag und Bekanntmachung des Hinweises auf die Patenterteilung: **14.08.2024**
(21) Anmeldenummer: 17724793.9
(22) Anmeldetag: 16.05.2017
(51) Int. Cl.: B60L 53/16, B60L 53/18, H01R 9/05, H01B 7/42, H01B 9/00

(54) **LADEKABEL ZUR ÜBERTRAGUNG ELEKTRISCHER ENERGIE, LADESTECKER UND LADESTATION ZUR ABGABE ELEKTRISCHER ENERGIE AN EINEN EMPFÄNGER ELEKTRISCHER ENERGIE**
CHARGING CABLE FOR TRANSFER OF ENERGY, CHARGING CONNECTOR AND CHARGING STATION FOR SUPPLY OF ENERGY TO AN ENERGY RECEIVER
CÂBLE DE CHARGE DESTINÉ À LA TRANSMISSION D'ÉNERGIE ÉLECTRIQUE, CONNECTEUR DE CHARGE ET STATION DE CHARGE POUR LA DISTRIBUTION D'ÉNERGIE ÉLECTRIQUE À UN RÉCEPTEUR D'ÉNERGIE ÉLECTRIQUE

(30) Priorität: 01.06.2016 DE 102016209607
(43) Veröffentlichungstag der Anmeldung: 10.04.2019
(73) Patentinhaber: PHOENIX CONTACT E-Mobility GmbH, 32816 Schieder-Schwalenberg (DE)
(72) Erfinder: FÜHRER, Thomas, 32825 Blomberg (DE)
(74) Vertreter: Richly & Ritschel Patentanwälte PartG mbB
(86) Internationale Anmeldenummer: PCT/EP2017/061716
(87) Internationale Veröffentlichungsnummer: WO 2017/207266

(56) Entgegenhaltungen:
- EP-A1- 2 874 156
- EP-A1- 2 874 156
- WO-A1-2010/142917
- WO-A1-2010/142917
- WO-A1-2015/060294
- WO-A1-2015/060294
- DE-A1- 102010 033 441
- DE-A1- 102010 033 441
- DE-A1- 102015 114 133
- DE-A1- 3 528 585
- DE-A1- 3 528 585
- DE-U1- 202007 012 165
- DE-U1- 202007 012 165
- DE-U1- 202007 012 165
- DE-U1- 202014 000 328
- DE-U1- 202014 000 328
- DE-U1- 202014 000 328
- DE-U1- 9 319 131
- DE-U1- 9 319 131
- DE-U1- 9 319 131
- FR-A- 1 164 751
- FR-A- 1 164 751
- US-A1- 2015 107 874
- US-A1- 2015 217 654
- ANONYMOUS: "Leitungsquerschnitt paralleler Adern - Mikrocontroller.net", 21 June 2007 (2007-06-21), XP055391912, Retrieved from the Internet <URL:https://www.mikrocontroller.net/topic/71862> [retrieved on 20170718]
- ANONYMOUS: "Leitungsquerschnitt paralleler Adern - Mikrocontroller.net", 21 June 2007 (2007-06-21), XP055391912, Retrieved from the Internet <URL:https://www.mikrocontroller.net/topic/71862> [retrieved on 20170718]

## Beschreibung

Die vorliegende Erfindung betrifft ein Ladekabel zur Übertragung elektrischer Energie, das insbesondere zur Übertragung elektrischer Energie beim Aufladen eines Elektrofahrzeugs verwendet wird. Ferner betrifft die vorliegende Erfindung einen Ladestecker zur Kopplung mit einer korrespondierenden Verbindungsvorrichtung und zur Übertragung elektrischer Energie. Weiterhin betrifft die vorliegende Erfindung eine Ladestation zur Abgabe elektrischer Energie an einen Empfänger elektrischer Energie.

Aus dem Stand der Technik sind Ladekabel zur Übertragung elektrischer Energie bekannt, die zwei jeweils unterschiedlichen Spannungspotentialen zugeordnete Stromleitungskabel aufweisen, die von einer Mantelleitung umschlossen sind. Bei der Übertragung elektrischer Ströme über die Stromleitungskabel erwärmen sich diese aufgrund ohmscher Verluste innerhalb der Stromleitungskabel. Bei einer Erwärmung der Stromleitungskabel steigt wiederum der ohmsche Widerstand der Stromleitungskabel, so dass dann die Erwärmung der Stromleiterkabel beschleunigt vonstatten geht.

Bei aus dem Stand der Technik bekannten Ladekabeln ist eine Übertragung von Wärme von dem Stromleitungskabel auf die weiteren im Ladekabel vorhandenen Strukturen nicht sehr effizient.

Zur Reduzierung der erzeugten Wärme muss der ohmsche Widerstand des Stromleitungskabels reduziert werden. Hierzu ist es bekannt, die Leitungsquerschnitte von Stromleitungskabeln zu erhöhen. Diese Vorgehensweise stößt jedoch aus handhabungstechnischen Gründen an Grenzen, da ein entsprechendes Ladekabel, mit dem Ladeströme von 350 A bei Spannungen von bis zu 1000 V übertragbar sind, derart groß und schwer wäre, dass ein Bedienen eines Ladesteckers, in dem ein entsprechendes Ladekabel mündet, nur schwer möglich ist, da ein entsprechendes Ladekabel ein hohes Gewicht aufweisen würde.

Aufgrund eines durch die Ladekabel fließenden Ladestroms heizen sich die Ladekabel unweigerlich aufgrund von ohmschen Stromwärmeverlusten auf. Das Aufheizen der Ladekabel ist jedoch auf eine Grenztemperaturerhöhung limitiert. So ist beispielsweise gemäß der Norm IEC 62196-3 die Grenztemperaturerhöhung auf 50K limitiert.

Bei einer intermittierenden Aufladung eines Akkumulators sind hingegen höhere Ladeströme von 350 A und mehr über begrenzte Zeiträume notwendig, um den Akkumulator in einer gewünscht kurzen Zeit aufzuladen. Dies wiederum führt zu einer temporären Erhitzung der Ladekabel, die über der Grenztemperaturerhöhung liegt. Wie bereits oben erwähnt, kann der Leitungsquerschnitt der Ladekabel nicht beliebig vergrößert werden, da dies die Handhabe des mit den Ladekabeln verbundenen Ladesteckers erschweren würde.

In diesem Zusammenhang ist beispielsweise aus der DE 35 28 585 A1 eine Schrämleitung mit integriertem Wasserschlauch bekannt, wobei der Wasserschlauch im Zentrum der Leitung angeordnet ist. Drei Energieadern der Leitung sind in jeweils zwei Teiladern aufgeteilt, wobei diese sechs Teiladern zusammen mit kombinierten Steuer-/Überwachungsadern in symmetrischer Zuordnung einlagig auf den Wasserschlauch aufgeseilt sind. Dabei besteht jede Teilader aus einem Leiter, der Isolierung und einer äußeren Leitschicht. Jede Steuer-/Überwachungsader besteht aus einem Kernelement mit einem Tragfaden, einer Kunststoffumhüllung und einem konzentrisch aufgebrachten Steuerleiter, einer Isolierung und einem darauf aufgebrachten konzentrischen Überwachungsleitermit einer darüber angeordneten extrudierten äußeren Leitschicht. Auf den Verseilverband sind unter Zwischenlage einer Folienbespinnung der Innenmantel und der Außenmantel aufgebracht. In den Außenmantel ist ein metallisches Geflecht aus einer Mischlitze aus Kupfer- und Stahldrähten eingebettet, das zugleich den Schutzleiter der Leitung bildet.

Das Dokument Anonymous: "Leitungsquerschnitt paralleler Adern - Mikrocontroller.net", 21. Juni 2007 (2007-06-21), XP055391912, betrifft allgemeine Lehren zu Leitungsquerschnitten paralleler Adern.

Dokument WO 2015/060294 A1 betrifft ein Ladesteckverbinder mit einem stromversorgungsseitigen Anschluss, der mit der Stromversorgungsseite verbunden ist, einem Innengehäuse, das den stromversorgungsseitigen Anschluss aufnimmt, einem Zwischenanschluss, der einen Stromversorgungsanschlussabschnitt, der elektrisch mit dem stromversorgungsseitigen Anschluss verbunden und von diesem getrennt werden kann, und einem Einlassanschlussabschnitt, der elektrisch mit einem einlassseitigen Anschluss, der mit der Fahrzeugeinlassseite verbunden ist, verbunden und von diesem getrennt werden kann. Ein Kassettengehäuse, das den Zwischenanschluss aufnimmt und an das Innengehäuse montiert ist, kann in den Fahrzeugeinlass eingebaut werden.

US 2015/217654 A1 betrifft ein Ladesystem für ein elektrisches Fahrzeug umfassend: eine Stromversorgung; ein Kabel mit einem ersten und einem zweiten Ende, wobei das erste Ende an der Stromversorgung befestigt ist, wobei das Kabel einen Ladeleiter und eine Kühlleitung umfasst, die sich jeweils von dem ersten Ende zu dem zweiten Ende erstrecken; und einen Verbinder, der an dem zweiten Ende des Kabels befestigt ist, wobei der Verbinder einen Formfaktor aufweist, der einem Ladeanschluss des elektrischen Fahrzeugs entspricht; wobei die Kühlleitung angepasst ist, um ein Fluid zu transportieren, das den Ladeleiter kühlt.

Der vorliegenden Erfindung liegt die Aufgabe zugrunde, ein Ladekabel bereitzustellen, das erhöhte Ladeströme bei einer begrenzten Aufheizung ermöglicht, folglich also eine erhöhte Stromtragfähigkeit aufweist.

Diese Aufgabe wird durch ein Ladekabel mit den Merkmalen des Anspruchs 1 gelöst. Vorteilhafte Ausführungsformen sind in den von Anspruch 1 abhängigen Ansprüchen beschrieben.

Ferner liegt der vorliegenden Erfindung die Aufgabe zugrunde, ein Ladesystem bereitzustellen, mittels dem erhöhte Ladeströme übertragbar sind, ohne dass sich der Ladestecker übermäßig erhitzt.

Die Erfindung ist durch die Ansprüche definiert.

Diese Aufgabe wird durch ein Ladesystem mit den Merkmalen des Anspruchs 10 gelöst.

Letztendlich liegt der vorliegenden Erfindung auch die Aufgabe zugrunde, eine Ladestation zur Abgabe elektrischer Energie an einen Empfänger elektrischer Energie bereitzustellen, mittels der erhöhte Spitzenladeströme übertragbar sind. Diese Aufgabe wird durch eine Ladestation mit den Merkmalen des Anspruchs 11 gelöst.

Im Genaueren wird die der vorliegenden Erfindung zugrundeliegende Aufgabe durch ein Ladekabel zur Übertragung elektrischer Energie mit einer Mantelleitung gelöst, wobei das Ladekabel die folgenden Merkmale aufweist:
- innerhalb der Mantelleitung sind zumindest vier Stromleiterkabel angeordnet;
- ein erstes Stromleiterkabel und ein zweites Stromleiterkabel sind gemeinsam einem ersten Spannungspotential zugeordnet;
- ein drittes Stromleiterkabel und ein viertes Stromleiterkabel sind gemeinsam einem zweiten Spannungspotential zugeordnet;
- die ersten und zweiten Stromleiterkabel sowie die dritten und vierten Stromleiterkabel an den Enden des Ladekabels entsprechend verbunden sind;
- innerhalb der Mantelleitung ist zusätzlich ein fünftes Stromleiterkabel angeordnet, das als Schutzleiterkabel ausgebildet ist;
- das Ladekabel weist zumindest eine Kühlleitung auf, die innerhalb der Mantelleitung angeordnet und von einem Kühlfluid durchströmbar ist;
- die Kühlleitung steht mit jedem Stromleiterkabel in direktem Kontakt;
- die Kühlleitung ist als Zentralkühlleitung zentral innerhalb der Mantelleitung angeordnet;
- im Querschnitt des Ladekabels ist die Zentralkühlleitung von sämtlichen Stromleiterkabel sternförmig umgeben;
- die Zentralkühlleitung steht mit jedem Stromleiterkabel in direktem Kontakt;
- das Ladekabel weist zusätzlich zu der Zentralkühlleitung eine zweite Kühlleitung und eine dritte Kühlleitung auf, die jeweils von einem Kühlfluid durchströmbar sind; und
- im Querschnitt des Ladekabels sind die zweite Kühlleitung und die dritte Kühlleitung sternförmig um die Zentralkühlleitung angeordnet.

Die Mantelleitung kann alternativ auch als Kabelmantel bezeichnet werden.

Durch Bereitstellen von vier Stromleiterkabeln, wobei jeweils zwei Stromleiterkabel einem gemeinsamen Spannungspotential zugeordnet sind, vergrößert sich die Oberfläche der Stromleitungspaare, die jeweils einem Spannungspotential zugeordnet sind. Dabei bilden das erste Stromleiterkabel und das zweite Stromleiterkabel ein erstes Stromleiterpaar, das einem gemeinsamen Spannungspotential zugeordnet ist, beispielsweise dem Pluspol bei einem als Gleichspannungsladekabel ausgebildeten Ladekabel. Das dritte Stromleitungskabel und das vierte Stromleitungskabel bilden ein zweites Stromleiterpaar, das einem gemeinsamen Spannungspotential zugeordnet ist, beispielsweise dem Minuspol bei einem als Gleichspannungsladekabel ausgebildeten Ladekabel. Durch die Vergrößerung der Oberfläche der stromführenden Kabel wird die in den Stromleiterkabeln durch ohmsche Verluste erzeugte Wärme verbessert auf den Rest des Ladekabels übertragen. Folglich weisen die Stromleiterkabel eine niedrigere Temperatur auf, so dass mit den Stromleiterkabeln größere Ladeströme übertragen werden können, ohne dass die Stromleiterkabel und das Ladekabel selber übermäßig erhitzt werden. Folglich ist es möglich, mit dem erfindungsgemäßen Ladekabel erhöhte Ladeströme zu übertragen, ohne die Leitungsquerschnitte der Stromleiterkabel zu vergrößern. Daher wird die Handhabbarkeit des Ladekabels und beispielsweise eines mit dem Ladekabel gekoppelten Ladesteckers nicht verschlechtert, obwohl größere Ladeströme mittels der Ladekabel übertragbar sind. Weiterhin wird eine übermäßige Erhitzung der Stromleiterkabel verhindert.

Durch Anordnen einer Kühlleitung, die von einem Kühlfluid durchströmbar ist, wird das Ladekabel nochmals verbessert gekühlt. Die in den Stromleiterkabeln durch ohmsche Verluste erzeugte Wärme wird auf die Kühlleitung und somit auf das die Kühlleitung durchströmende Kühlfluid übertragen, so dass die Temperatur des gesamten Ladekabels und insbesondere die Temperatur der Stromleiterkabel besonders effektiv reduziert wird. Daher können mit einem entsprechend ausgebildeten Ladekabel nochmals größere Ladeströme übertragen werden, ohne dass die Querschnitte der Stromleiterkabel vergrößert werden müssen. Hierdurch bleibt die Handhabbarkeit des Ladekabels und eines mit dem Ladekabel verbundenen Ladesteckers erhalten.

Durch eine entsprechende Ausbildung des Ladekabels ist eine besonders effektive Kühlung ermöglicht.

Bei dem entsprechend ausgebildeten Ladekabel kann die in den Stromleiterkabeln erzeugte Wärme nochmals verbessert auf die Kühlleitung übertragen werden, so dass sich mit dem entsprechend ausgebildeten Ladekabel erhöhte Ladeströme übertragen lassen.

Durch Bereitstellen weiterer Kühlleitungen im Ladekabel kann dieses verbessert gekühlt werden. Insbesondere durch die sternförmige Anordnung der zweiten Kühlleitung und der dritten Kühlleitung um die Zentralkühlleitung können die Stromleiterkabel an die Kühlleitungen aufgrund der erhöhten Kontaktfläche verbessert Wärme abgeben.

Vorzugsweise sind das erste Stromleiterkabel und das zweite Stromleiterkabel miteinander galvanisch verbunden. Diese galvanische Verbindung kann vorzugsweise an den Enden des Ladekabels realisiert sein. Ferner sind vorzugsweise das dritte Stromleiterkabel und das vierte Stromleiterkabel miteinander galvanisch verbunden. Weiter vorzugsweise weisen die Stromleiterkabel einen kreisrunden Querschnitt auf. Weiter vorzugsweise sind die Durchmesser der Stromleiterkabel identisch.

Die Stromleiterkabel sind vorzugsweise jeweils von einem Isolationsmantel umschlossen. Das Ladekabel ist insbesondere für die Kopplung mit einem Ladestecker zur Aufladung eines Elektrofahrzeugs ausgebildet.

Gemäß einer vorteilhaften Ausgestaltung des Ladekabels ist an einer Innenmantelfläche der Mantelleitung eine Metallschicht, beispielsweise in Form einer Metallfolie oder einer metallkaschierten Kunststofffolie vorgesehen. Weiter vorzugsweise steht die Metallschicht/Metallfolie/metallkaschierte Kunststofffolie mit der Innenmantelfläche der Mantelleitung in direktem Kontakt.

Das entsprechend ausgebildete Ladekabel weist eine homogenere Wärmeverteilung insbesondere an einer Außenfläche des Ladekabels.

Weiter vorzugsweise ist das Ladekabel derart ausgebildet, dass das fünfte Stromleiterkabel zwischen dem zweiten Stromleiterkabel und dem vierten Stromleiterkabel oder zwischen dem ersten Stromleiterkabel und dem dritten Stromleiterkabel angeordnet ist.

Dabei steht das fünfte Stromleiterkabel, also das Schutzeiterkabel vorzugsweise mit dem zweiten Stromleiterkabel und dem vierten Stromleiterkabel oder mit dem ersten Stromleiterkabel und dem dritten Stromleiterkabel in direktem Kontakt. Durch eine entsprechende Ausbildung des Ladekabels kann in den ersten bis vierten Stromleiterkabeln erzeugte Wärme auf das Schutzleiterkabel übertragen werden, so dass die Wärme innerhalb des Ladekabels verbessert verteilt wird, wodurch die Temperaturen der ersten bis vierten Stromleitungskabel reduziert wird. Daher können mittels der ersten bis vierten Stromleiterkabeln erhöhte Ladeströme übertragen werden, ohne das die Stromleiterkabel und das Ladekabel selbst übermäßig erhitzen.

Selbstverständlich können innerhalb des Ladekabels auch zwei und mehr Kühlleitungen angeordnet sein, die alle innerhalb der Mantelleitung angeordnet sind.

Als Kühlfluid kann beispielsweise Wasser verwendet werden. Ferner können als Kühlfluid Ketone, insbesondere fluorisierte Ketone verwendet werden. Ketone weisen den Vorteil auf, dass diese nicht elektrisch leitfähig sind.

Die Kühlleitung, die auch als Zentralkühlleitung bezeichnet wird, weist vorzugsweise einen größeren Durchmesser als die jeweiligen Stromleiterkabel auf.

Weiter vorzugsweise steht die Kühlleitung mit jedem Stromleiterkabel mittels zumindest eines zwischen der Kühlleitung und dem jeweiligen Stromleiterkabel angeordneten Zugentlastungskabels in mittelbarem Kontakt.

Durch Bereitstellen der Zugentlastungskabel zwischen den Stromleiterkabeln und der Kühlleitung stehen die Stromleiterkabel zusätzlich zu einem möglichen unmittelbaren Kontakt auch mittelbar über die jeweiligen Zugentlastungkabel mit der Kühlleitung in Kontakt, so dass die Wärme in den Stromleitungskabeln nochmals verbessert auf die Kühlleitung übertragen werden kann. Die Zugentlastungskabel sind dabei vorzugsweise als Aramidfaserkabel ausgebildet.

Vorzugsweise weisen die zweite Kühlleitung und die Dritte Kühlleitung jeweils einen kreisförmigen Querschnitt auf. Weiter vorzugsweise weisen die zweite Kühlleitung und die dritte Kühlleitung einen gleichen Durchmesser wie die Stromleiterkabel auf.

Weiter vorzugsweise ist das Ladekabel derart ausgebildet, dass die Zentralkühlleitung mit der zweiten Kühlleitung und der dritten Kühlleitung in direktem Kontakt steht, und wobei die Zentralkühlleitung ferner mit der zweiten Kühlleitung und der dritten Kühlleitung mittels zumindest jeweils einem zwischen der Zentralkühlleitung und der zweiten Kühlleitung und zwischen der Zentralkühlleitung und der dritten Kühlleitung angeordneten Zugentlastungskabel in mittelbarem Kontakt steht.

Bei dem entsprechend ausgebildeten Ladekabel kann die in den Stromleiterkabeln erzeugte Wärme nochmals verbessert auf die Kühlleitung übertragen werden, so dass sich mit dem entsprechend ausgebildeten Ladekabel erhöhte Ladeströme übertragen lassen.

Vorteilhafterweise ist das Ladekabel dabei derart ausgebildet, dass das Ladekabel zusätzlich zu der Zentralkühlleitung eine zweite Kühlleitung und eine dritte Kühlleitung aufweist, die jeweils von einem Kühlfluid durchströmbar sind, wobei im Querschnitt des Ladekabels die zweite Kühlleitung und die dritte Kühlleitung sternförmig um die Zentralkühlleitung angeordnet sind.

Durch Bereitstellen weiterer Kühlleitungen im Ladekabel kann dieses verbessert gekühlt werden. Insbesondere durch die sternförmige Anordnung der zweiten Kühlleitung und der dritten Kühlleitung um die Zentralkühlleitung können die Stromleiterkabel an die Kühlleitungen aufgrund der erhöhten Kontaktfläche verbessert Wärme abgeben.

Vorzugsweise weisen die zweite Kühlleitung und die Dritte Kühlleitung jeweils einen kreisförmigen Querschnitt auf. Weiter vorzugsweise weisen die zweite Kühlleitung und die dritte Kühlleitung einen gleichen Durchmesser wie die Stromleiterkabel auf.

Weiter vorzugsweise ist das Ladekabel derart ausgebildet, dass die Zentralkühlleitung mit der zweiten Kühlleitung und der dritten Kühlleitung in direktem Kontakt steht, und wobei die Zentralkühlleitung ferner mit der zweiten Kühlleitung und der dritten Kühlleitung mittels zumindest jeweils einem zwischen der Zentralkühlleitung und der zweiten Kühlleitung und zwischen der Zentralkühlleitung und der dritten Kühlleitung angeordneten Zugentlastungskabel in mittelbarem Kontakt steht.

Gemäß einer weiteren vorteilhaften Ausgestaltung ist das Ladekabel derart ausgebildet, dass die zweite Kühlleitung zwischen dem ersten Stromleiterkabel und dem zweiten Stromleiterkabel oder zwischen dem zweiten Stromleiterkabel und dem fünften Stromleiterkabel angeordnet ist steht mit diesen jeweils in direktem Kontakt steht, wobei die dritte Kühlleitung zwischen dem dritten Stromleiterkabel und dem vierten Stromleiterkabel oder zwischen dem vierten Stromleiterkabel und dem fünften Stromleiterkabel angeordnet ist und mit diesen jeweils in direktem Kontakt steht.

Eine entsprechende Ausbildung des Ladekabels ermöglicht einen nochmals verbesserten Wärmeübertrag von den Stromleiterkabeln auf die Kühlleitungen, so dass die Stromleiterkabel eine verminderte Temperatur aufweisen, wodurch mittels der Stromleiterkabel erhöhte Ladeströme übertragbar sind.

Vorteilhafterweise ist das Ladekabel derart ausgebildet, dass im Querschnitt des Ladekabels die Stromleiterkabel, die zweite Kühlleitung und die dritte Kühlleitung winkeläquidistant um die Zentralkühlleitung herum angeordnet sind und jeweils mit der Zentralkühlleitung in direktem Kontakt stehen.

Aufgrund des symmetrischen Aufbaus des entsprechend ausgebildeten Ladekabels bietet dieses eine verbesserte Wärmeübertragung von den Stromleiterkabeln auf die übrigen Strukturen und die übrigen Bauteile des Ladekabels, so dass diese eine gleichmäßigere Temperatur aufweist.

Weiter vorzugsweise ist das Ladekabel derart ausgebildet, dass zwischen zwei zueinander direkt benachbarten und miteinander in direktem Kontakt stehenden Stromleiterkabeln eine Signalleitung angeordnet ist, die mit den miteinander in direktem Kontakt stehenden Stromleiterkabel ebenfalls in direktem Kontakt steht.

Auch durch den direkten Kontakt eines Stromleiterkabels mit einer Signalleitung wird Wärme von dem Stromleiterkabel auf das Signalkabel übertragen, wodurch sich die Temperatur der Stromleiterkabel vermindert.

Gemäß einer weiteren vorteilhaften Ausgestaltung ist das Ladekabel derart ausgebildet, dass zwischen einem Stromleiterkabel und der zweiten Kühlleitung oder der dritten Kühlleitung, die mit dem Stromleiterkabel in direktem Kontakt steht, zumindest eine Signalleitung angeordnet ist, die mit dem Stromleiterkabel und mit der zweiten Kühlleitung oder der dritten Kühlleitung in direktem Kontakt steht.

Folglich stehen die Stromleiterkabel zusätzlich über den unmittelbaren Kontakt mit den Kühlleitungen mit diesen mittelbar über die Signalleitung in Kontakt, so dass die in den Stromleitungskabeln erzeugte Wärme verbessert auf die Kühlleitungen übertragen werden kann, wodurch die Temperatur der Stromleitungskabel nochmals effektiver reduziert wird.

Vorzugsweise sind die Stromleiterkabel und/oder die Kühlleitungen und/oder die Zugentlastungskabel sternförmig um die Zentralkühlleitung angeordnet.

Die der vorliegenden Erfindung zugrundeliegende Aufgabe wird auch durch ein Ladesystem, umfassend das erfindungsgemäße Ladekabel und einen Ladestecker zur Kopplung mit einer korrespondierenden Verbindungsvorrichtung und zur Übertragung elektrischer Energie gelöst, der dadurch gekennzeichnet ist, dass der Ladestecker zumindest zwei in einem Ladesteckergehäuse angeordnetes Leistungskontakte aufweist, die über eine Kontaktseite des Ladesteckergehäuses zugänglich sind, wobei ein erster Leistungskontakt galvanisch mit dem ersten Stromleiterkabel und dem zweiten Stromleiterkabel des Ladekabels verbunden ist, und wobei ein zweiter Leistungskontakt galvanisch mit dem dritten Stromleiterkabel und dem vierten Stromleiterkabel des Ladekabels verbunden ist.

Ferner wird die der vorliegenden Erfindung zugrundeliegende Aufgabe durch eine Ladestation zur Abgabe elektrischer Energie an einen Empfänger elektrischer Energie gelöst, die ein oben beschriebenes Ladesystem aufweist.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine perspektivische Darstellung eines erfindungsgemäßen Ladekabels der vorliegenden Erfindung; und
- Figur 2:: eine Schnittdarstellung des in Figur 1 dargestellten Ladekabels.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben wurden, auch separat in andere Ausführungsformen verwendbar.

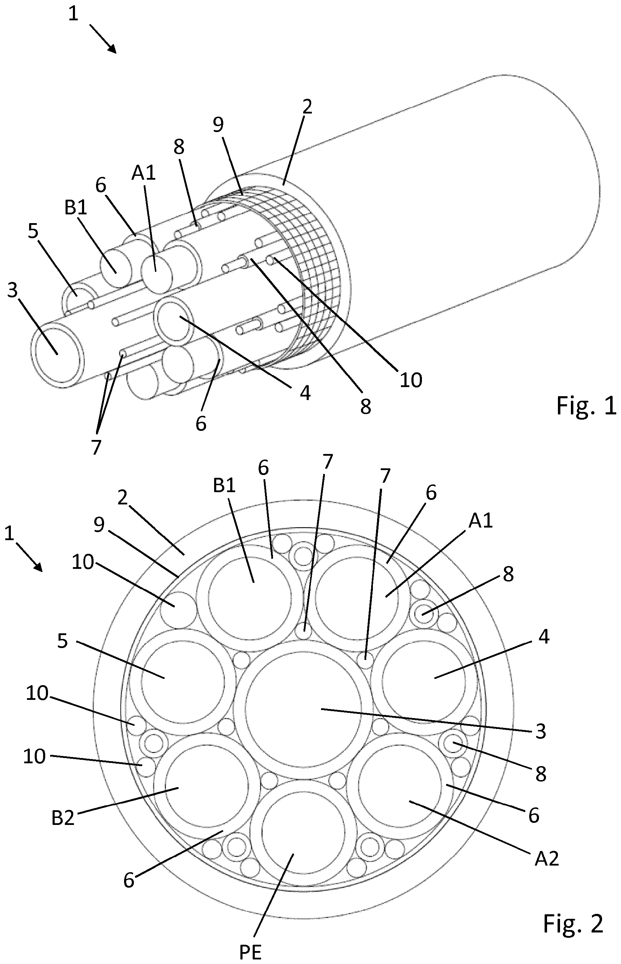

In den Figuren 1 und 2 ist ein erfindungsgemäßes Ladekabel 1 gemäß der vorliegenden Erfindung dargestellt, wobei in Figur 1 das Ladekabel 1 in einer perspektivischen Darstellung und in Figur 2 in einer Schnittdarstellung gezeigt ist.

Das Ladekabel 1 zur Übertragung elektrischer Energie weist eine Mantelleitung 2 auf, die sämtliche Komponenten des Ladekabels 1 umschließt. An einer Mantelinnenfläche der Mantelleitung 2 schließt sich eine Metallfolie 9 an, die auch beispielsweise in Form einer Metallfolie oder einer metallkaschierten Kunststofffolie ausgebildet sein kann. Die Metallfolie 9 umschließt folglich auch sämtliche Komponenten (außer die Mantelleitung 2) des Ladekabels 1. Das Ladekabel 1 weist ferner fünf Stromleiterkabel, nämlich ein erstes Stromleiterkabel A1, ein zweites Stromleiterkabel A2, ein drittes Stromleiterkabel B1 und ein viertes Stromleiterkabel B2, die in dem dargestellten Ausführungsbeispiel zu Übertragung von Gleichstrom ausgebildet sind, und ein als Schutzleiter PE ausgebildetes fünftes Stromleiterkabel PE auf. Sämtliche Stromleiterkabel A1, A2, B1, B2, PE sind jeweils von einem Isolationsmantel 6 umschlossen, sodass die Stromleiterkabel A1, A2, B1, B2, PE mit deren Umgebung nicht in elektrischen Kontakt stehen.

Ein erstes Stromleiterpaar bestehend aus dem ersten Stromleiterkabel A1 und dem zweite Stromleiterkabel A2 ist dabei einem gemeinsamen ersten Spannungspotential zugeordnet. Das erste Stromleiterpaar kann beispielsweise dem Pluspol bei einem als Gleichspannungsladekabel 1 ausgebildeten Ladekabel 1 zugeordnet sein. Ein zweites Stromleiterpaar bestehend aus dem dritten Stromleiterkabel B1 und dem vierten Stromleiterkabel B2 ist einem gemeinsamen zweiten Spannungspotential zugeordnet. Das zweite Stromleiterpaar kann beispielsweise dem Minuspol bei einem als Gleichspannungsladekabel 1 ausgebildeten Ladekabel 1 zugeordnet sein. Durch die Vergrößerung der Oberfläche, im Genaueren der Mantelflächen der Stromleiterkabel A1, A2, B1, B2 wird die in den Stromleiterkabeln durch ohmsche Verluste erzeugte Wärme verbessert auf den Rest des Ladekabels 1 übertragen. Folglich weisen die Stromleiterkabel A1, A2, B1, B2 eine niedrigere Temperatur auf, so dass mit den Stromleiterkabeln A1, A2, B1, B2 größere Ladeströme übertragen werden können, ohne dass die Stromleiterkabel A1, A2, B1, B2 und das Ladekabel 1 selber übermäßig erhitzt werden.

Der Schutzleiter PE ist zwischen dem zweiten Stromleiterkabel A2 und dem vierten Stromleiterkabel B2 angeordnet. Alternativ kann der Schutzleiter PE auch zwischen dem ersten Stromleiterkabel A1 und dem dritten Stromleiterkabel B1 angeordnet sein.

Aus den Figuren 1 und 2 ist ersichtlich, dass das Ladekabel 1 ferner drei Kühlleitungen 3, 4, 5 aufweist, die innerhalb der Mantelleitung 2 angeordnet sind, und in denen jeweils ein Kühlfluidkanal gebildet ist, sodass die Kühlleitungen 3, 4, 5 von einem Kühlfluid durchströmbar sind. Dabei ist die erste Kühlleitung 3 als Zentralkühlleitung 3 ausgebildet. Die Zentralkühlleitung 3 steht mit jedem der Stromleiterkabel A1, A2, B1, B2, PE in direktem Kontakt. Die zweite Kühlleitung 4 steht sowohl mit der Zentralkühlleitung 3 als auch mit dem ersten Stromleiterkabel A1 und dem zweiten Stromleiterkabel A2 in direktem Kontakt. Die dritte Kühlleitung 5 steht sowohl mit der Zentralkühlleitung 3 als auch mit dem dritten Stromleiterkabel B1 und dem vierten Stromleiterkabel B2 in direktem Kontakt. Aufgrund des direkten Kontakts der Stromleiterkabel A1, A2, B1, B2, PE mit den Kühlleitungen 3, 4, 5 wird die in den Stromleiterkabeln A1, A2, B1, B2, PE erzeugte Wärme somit mittels eines Kühlfluidstroms innerhalb der Kühlleitungen 3, 4, 5 effektiv abtransportiert.

Aus den Figuren ist ferner ersichtlich, dass die Zentralkühlleitung 3 mit jedem der Stromleiterkabel A1, A2, B1, B2, PE mittels zumindest einem zwischen der Zentralkühlleitung 3 und dem jeweiligen Stromleiterkabel A1, A2, B1, B2, PE angeordneten Zugentlastungskabel 7 in mittelbarem Kontakt. Die jeweiligen Zugentlastungkabel 7 können beispielsweise als Aramidfaserkabel 7 ausgebildet sein. Durch Bereitstellen der Zugentlastungskabel 7 zwischen den Stromleiterkabeln A1, A2, B1, B2, PE und der Zentralkühlleitung 3 stehen die Stromleiterkabel A1, A2, B1, B2, PE zusätzlich zu dem unmittelbaren Kontakt auch mittelbar über die jeweiligen Zugentlastungkabel 7 mit der Zentralkühlleitung 3 in Kontakt, so dass die Wärme in den Stromleitungskabeln A1, A2, B1, B2, PE nochmals verbessert auf die Zentralkühlleitung 3 übertragen werden kann.

Aus den Figuren ist ferner ersichtlich, dass die Zentralkühlleitung 3 zentral innerhalb der Mantelleitung 2 angeordnet ist und im Querschnitt des Ladekabels 1 die Zentralkühlleitung 3 von sämtlichen Stromleiterkabeln A1, A2, B1, B2, PE und von der zweiten Kühlleitung 4 und der dritten Kühlleitung 5 sternförmig umgeben ist. Im Querschnitt des Ladekabels 1 sind somit die Stromleiterkabel A1, A2, B1, B2, PE, die zweite Kühlleitung 4 und die dritte Kühlleitung 5 winkeläquidistant um die Zentralkühlleitung 3 herum angeordnet und stehen mit der Zentralkühlleitung 3 jeweils in direktem Kontakt.

Das erfindungsgemäße Ladekabel 1 umfasst ferner mehrere Signalleitungen 8, die zwischen jeweils zwei zueinander direkt benachbarten und miteinander in direktem Kontakt stehenden Stromleiterkabeln A1, A2, B1, B2, PE angeordnet sind. Die Signalleitungen 8 stehen dabei jeweils mit den Stromleiterkabeln A1, A2, B1, B2, PE E ebenfalls in direktem Kontakt.

Ferner sind einige der Signalleitungen 8 zwischen einem Stromleiterkabel A1, A2, B1, B2, PE und der zweiten Kühlleitung 4 oder der dritten Kühlleitung 5, die mit demjenigen Stromleiterkabel A1, A2, B1, B2, PE in direkten Kontakt stehen, angeordnet, und stehen mit dem jeweiligen Stromleiterkabel A1, A2, B1, B2, PE und der zweiten Kühlleitung 4 oder der dritten Kühlleitung 5 in direktem Kontakt.

Das erfindungsgemäße Ladekabel 1 weist ferner mehrere Füllstränge 10 auf, die auch als Füllkabel 10 bezeichnet werden. Die Füllstränge 10 können aus einem Fasermaterial, beispielsweise aus einem Baumwollfasergewebe gebildet sein.

### Bezugszeichenliste:

- 1: Ladekabel
- 2: Mantelleitung / Kabelmantel
- 3: (erste) Kühlleitung / Zentralkühlleitung
- 4: zweite Kühlleitung
- 5: dritte Kühlleitung
- 6: Isolationsmantel (der jeweiligen Stromleiterkabel)
- 7: Zugentlastungskabel / Aramidfaserkabel
- 8: Signalleitung
- 9: Metallfolie
- 10: Füllkabel
- A1: erstes Stromleiterkabel
- A2: zweites Stromleiterkabel
- B1: drittes Stromleiterkabel
- B2: viertes Stromleiterkabel
- PE: Schutzleiter / fünftes Stromleiterkabel

## Patentansprüche

1. Ladekabel (1) zur Übertragung elektrischer Energie mit einer Mantelleitung (2), wobei das Ladekabel (1) die folgenden Merkmale aufweist:
- innerhalb der Mantelleitung (2) sind zumindest vier Stromleiterkabel (A1, A2, B1, B2, PE) angeordnet;
- ein erstes Stromleiterkabel (A1) und ein zweites Stromleiterkabel (A2) sind gemeinsam einem ersten Spannungspotential zugeordnet;
- ein drittes Stromleiterkabel (B1) und ein viertes Stromleiterkabel (B2) sind gemeinsam einem zweiten Spannungspotential zugeordnet;
- die ersten und zweiten Stromleiterkabel (A1, A2) sowie die dritten und vierten Stromleiterkabel (B1, B2) an den Enden des Ladekabels entsprechend verbunden sind;
- innerhalb der Mantelleitung (2) ist zusätzlich ein fünftes Stromleiterkabel (PE) angeordnet, das als Schutzleiterkabel (PE) ausgebildet ist;
- das Ladekabel (1) weist zumindest eine Kühlleitung (3, 4, 5) auf, die innerhalb der Mantelleitung (2) angeordnet und von einem Kühlfluid durchströmbar ist;
- die Kühlleitung (3) steht mit jedem Stromleiterkabel (A1, A2, B1, B2, PE) in direktem Kontakt;
- die Kühlleitung (3) ist als Zentralkühlleitung (3) zentral innerhalb der Mantelleitung (2) angeordnet;
- im Querschnitt des Ladekabels (1) ist die Zentralkühlleitung (3) von sämtlichen Stromleiterkabeln (A1, A2, B1, B2, PE) sternförmig umgeben; und
- die Zentralkühlleitung (3) steht mit jedem Stromleiterkabel (A1, A2, B1, B2, PE) in direktem Kontakt;
wobei das Ladekabel (1) **gekennzeichnet ist durch** die folgenden Merkmale:
- das Ladekabel (1) weist zusätzlich zu der Zentralkühlleitung (3) eine zweite Kühlleitung (4) und eine dritte Kühlleitung (5) auf, die jeweils von einem Kühlfluid durchströmbar sind; und
- im Querschnitt des Ladekabels (1) sind die zweite Kühlleitung (4) und die dritte Kühlleitung (5) sternförmig um die Zentralkühlleitung (3) angeordnet.

2. Ladekabel (1) nach Anspruch 1, **dadurch gekennzeichnet, dass** an einer Innenmantelfläche der Mantelleitung (2) eine Metallfolie (9) angeordnet ist.

3. Ladekabel (1) nach Anspruch 1 **dadurch gekennzeichnet, dass** das fünfte Stromleiterkabel (PE) zwischen dem zweiten Stromleiterkabel (A2) und dem vierten Stromleiterkabel (B2) oder zwischen dem ersten Stromleiterkabel (A1) und dem dritten Stromleiterkabel (B1) angeordnet ist.

4. Ladekabel (1) nach zumindest einem der Ansprüche 1 oder 3, **dadurch gekennzeichnet, dass** die Kühlleitung (3) mit jedem Stromleiterkabel (A1, A2, B1 B2, PE) mittels zumindest einem zwischen der Kühlleitung (3) und dem jeweiligen Stromleiterkabel (A1, A2, B1, B2, PE) angeordneten Zugentlastungskabel (7) in mittelbarem Kontakt steht.

5. Ladekabel (1) nach zumindest einem der vorhergehenden Ansprüche, **gekennzeichnet durch** die folgenden Merkmale:
- die Zentralkühlleitung (3) steht mit der zweiten Kühlleitung (4) und der dritten Kühlleitung (5) in direktem Kontakt; und
- die Zentralkühlleitung (3) steht ferner mit der zweiten Kühlleitung (4) und der dritten Kühlleitung (5) mittels zumindest jeweils einem zwischen der Zentralkühlleitung (3) und der zweiten Kühlleitung (4) und zwischen der Zentralkühlleitung (3) und der dritten Kühlleitung (5) angeordneten Zugentlastungskabel (7) in mittelbarem Kontakt.

6. Ladekabel (1) nach zumindest einem der vorhergehenden Ansprüche, **gekennzeichnet durch** die folgenden Merkmale:
- die zweite Kühlleitung (4) ist zwischen dem ersten Stromleiterkabel (A1) und dem zweiten Stromleiterkabel (A2) oder zwischen dem zweiten Stromleiterkabel (A2) und dem fünften Stromleiterkabel (PE) angeordnet und steht mit diesen jeweils in direktem Kontakt; und
- die dritte Kühlleitung (5) ist zwischen dem dritten Stromleiterkabel (B1) und dem vierten Stromleiterkabel (B2) oder zwischen dem vierten Stromleiterkabel (B2) und dem fünften Stromleiterkabel (PE) angeordnet und steht mit diesen jeweils in direktem Kontakt.

7. Ladekabel (1) nach zumindest einem der vorhergehenden Ansprüche, **dadurch gekennzeichnet, dass** im Querschnitt des Ladekabels (1) die Stromleiterkabel (A1, A2, B1, B2, PE), die zweite Kühlleitung (4) und die dritte Kühlleitung (5) winkeläquidistant um die Zentralkühlleitung (3) herum angeordnet sind und jeweils mit der Zentralkühlleitung (3) in direktem Kontakt stehen.

8. Ladekabel (1) nach zumindest einem der vorhergehenden Ansprüche, **dadurch gekennzeichnet, dass** zwischen zwei zueinander direkt benachbarten und miteinander in direktem Kontakt stehenden Stromleiterkabeln (A1, A2, B1, B2, PE) eine Signalleitung (8) angeordnet ist, die mit den miteinander in direktem Kontakt stehenden Stromleiterkabeln (A1, A2, B1, B2, PE) ebenfalls in direktem Kontakt steht.

9. Ladekabel (1) nach zumindest einem der vorhergehenden Ansprüche, **dadurch gekennzeichnet, dass** zwischen einem Stromleiterkabel (A1, A2, B1, B2, PE) und der zweiten Kühlleitung (4) oder der dritten Kühlleitung (5), die mit dem Stromleiterkabel (A1, A2, B1, B2, PE) in direktem Kontakt steht, zumindest eine Signalleitung (8) angeordnet ist, die mit dem Stromleiterkabel (A1, A2, B1, B2, PE) und mit der zweiten Kühlleitung (4) oder der dritten Kühlleitung (5) in direktem Kontakt steht.

10. Ladesystem, umfassend
- Ladekabel (1) nach einem der Ansprüche 1-9, und
- Ladestecker zur Kopplung mit einer korrespondierenden Verbindungsvorrichtung und zur Übertragung elektrischer Energie, der Ladestecker **gekennzeichnet durch** die folgenden Merkmale:
- der Ladestecker weist zumindest zwei in einem Ladesteckergehäuse angeordnete Leistungskontakte auf, die über eine Kontaktseite des Ladesteckergehäuses zugänglich sind;
- ein erster Leistungskontakt ist galvanisch mit dem ersten Stromleiterkabel (A1) und dem zweiten Stromleiterkabel (A2) des Ladekabels (1) verbunden; und
- ein zweiter Leistungskontakt ist galvanisch mit dem dritten Stromleiterkabel (B1) und dem vierten Stromleiterkabel (B2) des Ladekabels (1) verbunden.

11. Ladestation zur Abgabe elektrischer Energie an einen Empfänger elektrischer Energie, **dadurch gekennzeichnet, dass** die Ladestation eine Ladesystem nach Anspruch 10 aufweist.

## Claims

1. Charging cable (1) for transmitting electrical energy, having a sheathed cable (2), wherein the charging cable (1) has the following features:
- at least four current conductor cables (A1, A2, B1, B2, PE) are arranged within the sheathed cable (2);
- a first current conductor cable (A1) and a second current conductor cable (A2) are jointly assigned to a first voltage potential;
- a third current conductor cable (B1) and a fourth current conductor cable (B2) are jointly assigned to a second voltage potential;
- the first and second current conductor cables (A1, A2) and the third and fourth current conductor cables (B1, B2) are respectively connected at the ends of the charging cable;
- a fifth current conductor cable (PE), which is designed as a protective ground conductor cable (PE), is additionally arranged within the sheathed cable (2);
- the charging cable (1) has at least one cooling line (3, 4, 5) which is arranged within the sheathed cable (2) and through which a cooling fluid can flow;
- the cooling line (3) is in direct contact with each current conductor cable (A1, A2, B1, B2, PE);
- the cooling line (3) is arranged centrally as a central cooling line (3) within the sheathed cable (2);
- in the cross-section of the charging cable (1), the central cooling line (3) is surrounded in a star shape by all of the current conductor cables (A1, A2, B1, B2, PE); and
- the central cooling line (3) is in direct contact with each current conductor cable (A1, A2, B1, B2, PE);
wherein the charging cable (1) **is characterized by** the following features:
- the charging cable (1) has, in addition to the central cooling line (3), a second cooling line (4) and a third cooling line (5), through each of which a cooling fluid can flow; and
- in the cross-section of the charging cable (1), the second cooling line (4) and the third cooling line (5) are arranged in a star shape around the central cooling line (3).

2. Charging cable (1) according to claim 1, **characterized in that** a metal foil (9) is arranged on an inner lateral surface of the sheathed cable (2).

3. Charging cable (1) according to claim 1, **characterized in that** the fifth current conductor cable (PE) is arranged between the second current conductor cable (A2) and the fourth current conductor cable (B2) or between the first current conductor cable (A1) and the third current conductor cable (B1).

4. Charging cable (1) according to at least one of claims 1 or 3,
**characterized in that** the cooling line (3) is in indirect contact with each current conductor cable (A1, A2, B1, B2, PE) by means of at least one strain relief cable (7) arranged between the cooling line (3) and the respective current conductor cable (A1, A2, B1, B2, PE).

5. Charging cable (1) according to any of the preceding claims,
**characterized by** the following features:
- the central cooling line (3) is in direct contact with the second cooling line (4) and the third cooling line (5); and
- the central cooling line (3) is further in indirect contact with the second cooling line (4) and the third cooling line (5) by means of in each case at least one strain relief cable (7) arranged between the central cooling line (3) and the second cooling line (4) and between the central cooling line (3) and the third cooling line (5).

6. Charging cable (1) according to any of the preceding claims,
**characterized by** the following features:
- the second cooling line (4) is arranged between the first current conductor cable (A1) and the second current conductor cable (A2) or between the second current conductor cable (A2) and the fifth current conductor cable (PE), and is in each case in direct contact with these; and
- the third cooling line (5) is arranged between the third current conductor cable (B1) and the fourth current conductor cable (B2) or between the fourth current conductor cable (B2) and the fifth current conductor cable (PE), and is in each case in direct contact with each of them.

7. Charging cable (1) according to at least one of the preceding claims, **characterized in that,** in the cross-section of the charging cable (1), the current conductor cables (A1, A2, B1, B2, PE), the second cooling line (4), and the third cooling line (5) are arranged at an equidistant angular distance around the central cooling line (3) and are each in direct contact with the central cooling line (3).

8. Charging cable (1) according to at least one of the preceding claims, **characterized in that,** between two current conductor cables (A1, A2, B1, B2, PE) which are directly adjacent to and in direct contact with one another, a signal line (8) is arranged which is also in direct contact with the current conductor cables (A1, A2, B1, B2, PE) which are in direct contact with one another.

9. Charging cable (1) according to at least one of the preceding claims, **characterized in that,** between one current conductor cable (A1, A2, B1, B2, PE) and the second cooling line (4) or the third cooling line (5), which is in direct contact with the current conductor cable (A1, A2, B1, B2, PE), at least one signal line (8) is arranged, which is in direct contact with the current conductor cable (A1, A2, B1, B2, PE) and with the second cooling line (4) or the third cooling line (5).

10. Charging system, comprising
- a charging cable (1) according to any of claims 1-9, and
- a charging plug for coupling with a corresponding connection device and for transmitting electrical energy, the charging plug **characterized by** the following features:
- the charging plug has at least two power contacts arranged in a charging plug housing, which are accessible via a contact side of the charging plug housing;
- a first power contact is galvanically connected to the first current conductor cable (A1) and the second current conductor cable (A2) of the charging cable (1); and
- a second power contact is galvanically connected to the third current conductor cable (B1) and the fourth current conductor cable (B2) of the charging cable (1).

11. Charging station for delivering electrical energy to a receiver of electrical energy, **characterized in that** the charging station has a charging system according to claim 10.

## Revendications

1. Câble de charge (1) destiné à la transmission d'énergie électrique comportant une conduite sous gaine (2), dans lequel le câble de charge (1) présente les caractéristiques suivantes :
- à l'intérieur de la conduite sous gaine (2) sont agencés au moins quatre câbles conducteurs de courant (A1, A2, B1, B2, PE) ;
- un premier câble conducteur de courant (A1) et un deuxième câble conducteur de courant (A2) sont associés ensemble à un premier potentiel de tension ;
- un troisième câble conducteur de courant (B1) et un quatrième câble conducteur de courant (B2) sont associés ensemble à un second potentiel de tension ;
- les premier et deuxième câbles conducteurs de courant (A1, A2) et les troisième et quatrième câbles conducteurs de courant (B1, B2) sont connectés de manière correspondante aux extrémités du câble de charge ;
- à l'intérieur de la conduite sous gaine (2) est en outre agencé un cinquième câble conducteur de courant (PE) qui est conçu comme un câble conducteur de protection (PE) ;
- le câble de charge (1) présente au moins une conduite de refroidissement (3, 4, 5) qui est agencée à l'intérieur de la conduite sous gaine (2) et peut être traversée par un fluide de refroidissement ;
- la conduite de refroidissement (3) est en contact direct avec chaque câble conducteur de courant (A1, A2, B1, B2, PE) ;
- la conduite de refroidissement (3) est agencée en tant que conduite de refroidissement centrale (3) de manière centrale à l'intérieur de la conduite sous gaine (2) ;
- dans la section transversale du câble de charge (1), la conduite de refroidissement centrale (3) est entourée en étoile par tous les câbles conducteurs de courant (A1, A2, B1, B2, PE) ; et
- la conduite de refroidissement centrale (3) est en contact direct avec chaque câble conducteur de courant (A1, A2, B1, B2, PE) ;
dans lequel le câble de charge (1) **est caractérisé par** les caractéristiques suivantes :
- le câble de charge (1) présente, en plus de la conduite de refroidissement centrale (3), une deuxième conduite de refroidissement (4) et une troisième conduite de refroidissement (5), lesquelles peuvent respectivement être traversées par un fluide de refroidissement ; et
- dans la section transversale du câble de charge (1), la deuxième conduite de refroidissement (4) et la troisième conduite de refroidissement (5) sont agencées en étoile autour de la conduite de refroidissement centrale (3).

2. Câble de charge (1) selon la revendication 1, **caractérisé en ce qu'**une feuille métallique (9) est agencée sur une surface de gaine intérieure de la conduite sous gaine (2).

3. Câble de charge (1) selon la revendication 1, **caractérisé en ce que** le cinquième câble conducteur de courant (PE) est agencé entre le deuxième câble conducteur de courant (A2) et le quatrième câble conducteur de courant (B2) ou entre le premier câble conducteur de courant (A1) et le troisième câble conducteur de courant (B1).

4. Câble de charge (1) selon au moins l'une des revendications 1 ou 3, **caractérisé en ce que** la conduite de refroidissement (3) est en contact indirect avec chaque câble conducteur de courant (A1, A2, B1 B2, PE) au moyen d'au moins un câble de décharge de traction (7) agencé entre la conduite de refroidissement (3) et le câble conducteur de courant (A1, A2, B1, B2, PE) respectif.

5. Câble de charge (1) selon au moins l'une des revendications précédentes, **caractérisé par** les caractéristiques suivantes :
- la conduite de refroidissement centrale (3) est en contact direct avec la deuxième conduite de refroidissement (4) et la troisième conduite de refroidissement (5) ; et
- la conduite de refroidissement centrale (3) est en outre en contact indirect avec la deuxième conduite de refroidissement (4) et la troisième conduite de refroidissement (5) au moyen d'au moins respectivement un câble de décharge de traction (7) agencé entre la conduite de refroidissement centrale (3) et la deuxième conduite de refroidissement (4) et entre la conduite de refroidissement centrale (3) et la troisième conduite de refroidissement (5).

6. Câble de charge (1) selon au moins l'une des revendications précédentes, **caractérisé par** les caractéristiques suivantes :
- la deuxième conduite de refroidissement (4) est agencée entre le premier câble conducteur de courant (A1) et le deuxième câble conducteur de courant (A2) ou entre le deuxième câble conducteur de courant (A2) et le cinquième câble conducteur de courant (PE) et est respectivement en contact direct avec ceux-ci ; et
- la troisième conduite de refroidissement (5) est agencée entre le troisième câble conducteur de courant (B1) et le quatrième câble conducteur de courant (B2) ou entre le quatrième câble conducteur de courant (B2) et le cinquième câble conducteur de courant (PE) et est respectivement en contact direct avec ceux-ci.

7. Câble de charge (1) selon au moins l'une des revendications précédentes, **caractérisé en ce que,** dans la section transversale du câble de charge (1), les câbles conducteurs de courant (A1, A2, B1, B2, PE), la deuxième conduite de refroidissement (4) et la troisième conduite de refroidissement (5) sont agencés à équidistance angulaire autour de la conduite de refroidissement centrale (3) et sont respectivement en contact direct avec la conduite de refroidissement centrale (3).

8. Câble de charge (1) selon au moins l'une des revendications précédentes, **caractérisé en ce qu'**entre deux câbles conducteurs de courant (A1, A2, B1, B2, PE) directement voisins l'un de l'autre et en contact direct l'un avec l'autre est agencée une conduite de signalisation (8) qui est également en contact direct avec les câbles conducteurs de courant (A1, A2, B1, B2, PE) qui sont en contact direct l'un avec l'autre.

9. Câble de charge (1) selon au moins l'une des revendications précédentes, **caractérisé en ce qu'**entre un câble conducteur de courant (A1, A2, B1, B2, PE) et la deuxième conduite de refroidissement (4) ou la troisième conduite de refroidissement (5), laquelle est en contact direct avec le câble conducteur de courant (A1, A2, B1, B2, PE), est agencée au moins une conduite de signalisation (8) qui est en contact direct avec le câble conducteur de courant (A1, A2, B1, B2, PE) et avec la deuxième conduite de refroidissement (4) ou la troisième conduite de refroidissement (5).

10. Système de charge, comprenant
- un câble de charge (1) selon l'une des revendications 1 à 9, et
- un connecteur de charge destiné à être couplé à un dispositif de connexion correspondant et à transmettre de l'énergie électrique, le connecteur de charge **étant caractérisé par** les caractéristiques suivantes :
- le connecteur de charge présente au moins deux contacts de puissance agencés dans un boîtier de connecteur de charge, lesquels contacts sont accessibles par l'intermédiaire d'un côté de contact du boîtier de connecteur de charge ;
- un premier contact de puissance est connecté de manière galvanique au premier câble conducteur de courant (A1) et au deuxième câble conducteur de courant (A2) du câble de charge (1) ; et
- un second contact de puissance est connecté de manière galvanique au troisième câble conducteur de courant (B1) et au quatrième câble conducteur de courant (B2) du câble de charge (1).

11. Station de charge destinée à fournir de l'énergie électrique à un récepteur d'énergie électrique, **caractérisée en ce que** la station de charge présente un système de charge selon la revendication 10.
